# EUROPEAN PATENT APPLICATION

(11) **EP 2 975 508 A1**
(43) Date of publication of application: **20.01.2016**
(21) Application number: 13877704.0
(22) Date of filing: 02.12.2013
(51) Int. Cl.: G06F 3/048, G06F 3/041, G06F 3/0488

(54) **DISPLAY CONTROL**

(30) Priority: 15.03.2013 JP 2013053373
(71) Applicant: NEC CORPORATION, Tokyo 108-8001 (JP)
(72) Inventor: OKAMOTO, Junki, Kawasaki-shi Kanagawa 211-8666 (JP)
(74) Representative: Vossius & Partner Patentanwälte Rechtsanwälte mbB
(86) International application number: PCT/JP2013/082335
(87) International publication number: WO 2014/141548

(57) **Abstract**

A display control unit (130) displays multiple pieces of data stored in memory (110) on display unit (200) when operation detection unit (120) detects a first operation, and displays, from among the multiple pieces of data displayed on display unit (200), the data displayed at a position corresponding to the second operation, at a predetermined position on display unit (200) when operation detection unit (120) detects the second operation.

## Description

### Technical Field

The present invention relates to a display control apparatus, display control method, and program and information appliance for the display control method.

### Background Art

Generally, in information processing apparatuses such as personal computers and the like, when data is copied, the data designated for copying is stored on a clipboard and then the data is read out from the clipboard after the pasting position of the data is determined and pasted in that place. In this process, only the data stored last in the clipboard is used as the data to be pasted.

Therefore, if there are multiple pieces of data that need to be copied, for example a series of operations including copying the source data on an application displayed in the active window to a clipboard, switching display to the destination window of another application and then pasting the data from the clipboard, needs to be repeated by the number of pieces of data to copied. In addition, when data other than the data that has been saved last among the data that have once designated for copying and stored on the clipboard, has to be pasted, it is necessary to activate the window for that application of the copy source and store the data onto the clipboard once again. Thus, the copy-and-paste operation entails various inconvenient cases operations.

To deal with this, techniques for displaying the data saved on a clipboard have been conceived (see Patent Document 1, for example). Use of these techniques make it possible to display pieces of data that have been designated for copying, using a single application.

### Related Art Documents

### Patent Documents

Patent Document 1: JP2011-221902A

### Summary of the Invention

### Problems to be solved by the Invention

In mobile devices and the like, usually only one application can be displayed on the screen, so when the user switches applications, the user has to access the application start history, or the list or the like of the applications that are running. Therefore, even if the aforementioned clipboard displaying application is used, the user has to switch display each time when multiple pieces of data are copied, which gives rise to a time and effort consuming problem.

The object of the present invention is to provide a display control apparatus, a display control method and a program and information appliance for the display control method to solve the above-described problem.

### Means for Solving the Problems

A display control apparatus of the present invention includes:
a memory that stores multiple pieces of designated data;
an operation detection unit that detects a first operation and a second operation;
a display control unit that displays the multiple pieces of data stored in the memory on a display unit when the operation detection unit detects the first operation, and displays, from among the multiple pieces of data displayed on the display unit, the data displayed at a position corresponding to the second operation, at a predetermined position on the display unit when the operation detection unit detects the second operation.

A display control method of the present invention includes the steps of:
storing multiple pieces of designated data into a memory;
detecting a first operation and a second operation;
displaying the multiple pieces of data stored in the memory on a display unit when the first operation is detected; and,
displaying, from among the multiple pieces of data displayed on the display unit, the data displayed at a position corresponding to the second operation, at a predetermined position on the display unit when the second operation is detected.

A program of the present invention causes a computer to execute:
a step of storing multiple pieces of designated data into a memory;
a step of detecting a first operation and a second operation;
a step displaying the multiple pieces of data stored in the memory on a display unit when the first operation is detected; and,
a step of displaying, from among the multiple pieces of data displayed on the display unit, the data displayed at a position corresponding to the second operation, at a predetermined position on the display unit when the second operation is detected.

An information appliance of the present invention includes:
a display unit;
a memory that stores multiple pieces of designated data;
an operation detection unit that detects a first operation and a second operation;
a display control unit that displays the multiple pieces of data stored in the memory on the display unit when the operation detection unit detects the first operation, and displays, from among the multiple pieces of data displayed on the display unit, the data displayed at a position corresponding to the second operation, at a predetermined position on the display unit when the operation detection unit detects the second operation.

### Effect of the Invention

As has been described heretofore, in the present invention it is possible to easily paste data that has been designated for copying.

### Brief Description of the Drawings

[FIG. 1] A diagram showing the first exemplary embodiment of an information appliance of the present invention.
[FIG. 2] A diagram showing one example of the internal configuration of a display control apparatus shown in FIG. 1.
[FIG. 3] A diagram showing one example of the external appearance of the information appliance shown in FIG. 1.
[FIG. 4] A flow chart for explaining one example of a process in the display control method in the display control apparatus shown in FIG. 1, whereby the display control apparatus stores the data designated by the user for copying.
[FIG. 5] A flow chart for explaining one example of a process in the display control method in the display control apparatus shown in FIG. 1, which the display control apparatus preforms when the data designated by the user for copying is pasted.
[FIG. 6A] A diagram showing one example of how the display control apparatus shown in FIG. 1 makes the display unit display a display screen accompanying execution of an application.
[FIG. 6B] A diagram showing one example of a state of display that appears when the display control unit shown in FIG. 2 displays multiple pieces of data on the display unit in a list form.
[FIG. 6C] A diagram showing one example of a state of display that appears when the display control unit shown in FIG. 2 displays selected data on the display unit.
[FIG. 7] A diagram showing the second exemplary embodiment of an information appliance of the present invention.
[FIG. 8] A flow chart for explaining one example of a process in the display control method in the display control apparatus shown in FIG. 7, which the display control apparatus performs when the user pastes the data designated for copying.
[FIG. 9A] A diagram showing one example where the user is performing a predetermined operation when the display control apparatus shown in FIG. 7 displays a display screen accompanying execution of an application on the display unit.
[FIG. 9B] A diagram showing one example of a state of display on the display unit after completion of the process of Step 22.
[FIG. 9C] A diagram showing one example of a state of display that appears when the display control unit shown in FIG. 7 displays multiple pieces of data on the display unit in a list form.
[FIG. 9D] A diagram showing one example of a state of display that appears when the display control unit shown in FIG. 7 displays selected data on the display unit.
[FIG. 10A] A diagram showing one example of a state when the display control unit shown in FIG. 7 performs a process of displaying (entering) multiple pieces of data in the entry field.
[FIG. 10B] A diagram showing one example of a state when the display control unit shown in FIG. 7 performs a process of displaying (entering) multiple pieces of data in the entry field.
[FIG. 10C] A diagram showing one example of a state when the display control unit shown in FIG. 7 performs a process of displaying (entering) multiple pieces of data in the entry field.
[FIG. 10D] A diagram showing one example of a state when the display control unit shown in FIG. 7 performs a process of displaying (entering) multiple pieces of data in the entry field.
[FIG. 10E] A diagram showing one example of a state when the display control unit shown in FIG. 7 performs a process of displaying (entering) multiple pieces of data in the entry field.
[FIG. 11] A diagram showing the third exemplary embodiment of an information appliance of the present invention.
[FIG. 12] A diagram showing one example of the external appearance of the information appliance shown in FIG. 11.
[FIG. 13A] A diagram showing one example of a state of display that appears when the display control unit shown in FIG. 11 displays multiple pieces of data on the display unit in a list form.
[FIG. 13B] A diagram showing one example of a state of display that appears when the display control unit shown in FIG. 11 displays selected data on the display unit.
[FIG. 14A] A diagram showing one example of a list when a button for deleting all the historical data designated for copying and display in the list is displayed on the display unit by a display control unit.
[FIG. 14B] A diagram showing one example of a list when a button for deleting part of the historical data designated for copying and display in the list is displayed on the display unit by a display control unit.
[FIG. 15A] A diagram showing another display example of a paste button.
[FIG. 15B] A diagram showing one example of a list display button when the paste button shown in 15A has been selected.

### Mode for Carrying Out the Invention

The exemplary embodiments of the present invention will be described hereinbelow with reference to the drawings.

### (The First Exemplary Embodiment)

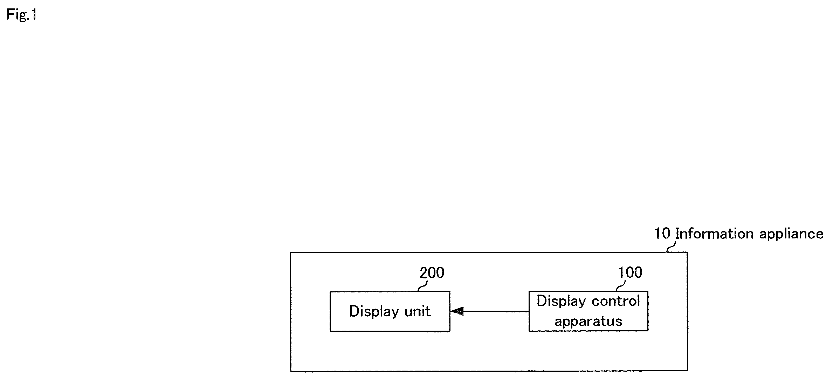

FIG. 1 is a diagram showing the first exemplary embodiment of an information appliance of the present invention.

As shown in FIG. 1, information appliance 10 of the embodiment includes display control apparatus 100 and display unit 200. Here in FIG. 1, from among the constituents provided for information appliance 10, essential constituents relating to the present exemplary embodiment are shown as an example.

Display unit 200 is a display such as LCD (Liquid Crystal Display) or the like that displays information in accordance with the instructions from display control apparatus 100.

Display control apparatus 100 controls display in display unit 200.

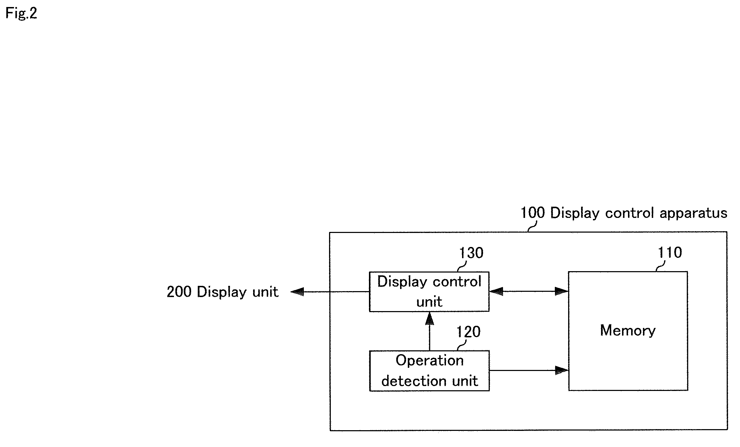

FIG. 2 is a diagram showing one example of the internal configuration of display control apparatus 100 shown in FIG. 1.

Display control apparatus 100 shown in FIG. 1 includes memory 110, operation detection unit 120 and display control unit 130 as shown in FIG. 2. Here, FIG. 2 shows one example of essential constituents relating to the present exemplary embodiment from among the constituents provided for display control apparatus 100.

Memory 110 stores programs and necessary information for processing. Memory 110 includes a clipboard area for storing data for copying, designated by user control, from the text strings, images and other data displayed on display unit 200 by display control apparatus 100. This clipboard area is a shared memory area through which data can be transferred not only within identical or single application or but also between multiple different applications. Memory 110 can store multiple pieces of designated data when multiple pieces of data for copying have been designated.

Operation detection unit 120 detects an operation that the user performs on information appliance 10 or display control apparatus 100. Examples of the operation include an operation that the user performs to select desired data (copy designation) from text strings, images and other data displayed on display unit 200 by display control apparatus 100, an operation for displaying the list of a plurality of data stored in memory 110 on display unit 200 (the first operation) and an operation for selecting the desired data from the list displayed on display unit 200 (to paste the data designated for copying onto the designated position) (the second operation). Specific methods for these operations may include methods that are practiced in general, or methods that have no particular limitations. For example, the operation may be a user control for moving the cursor or the like to select the desired data from text strings, images and other data displayed on display unit 200 by display control apparatus 100, or may be a user control for pressing a button key of hardware equipped in information appliance 10 to display the list of multiple pieces of data stored in memory 110. Additionally, as will be specifically described later, when display unit 200 has a touch panel function, the user may touch display unit 200 with the fingers or the like to achieve the operation.

Display control unit 130 controls display on display unit 200. Display control unit 130 makes display unit 200 perform a predetermined display in accordance with the result of detection from operation detection unit 120. Specifically, display control unit 130 makes display unit 200 display a plurality of data stored in memory 110 when operation detection unit 120 has detected an operation for displaying the list of a plurality of data stored in memory 110 on display unit 200. Further, display control unit 130, when operation detection unit 120 has detected an operation for selecting desired data from a list of a plurality of data being displayed on display unit 200, displays the data displayed in the position on display unit 200 in accordance with the operation, i.e., the selected data, from among the plurality of data being displayed on display unit 200, on a desired position (pasting position) on display unit 200.

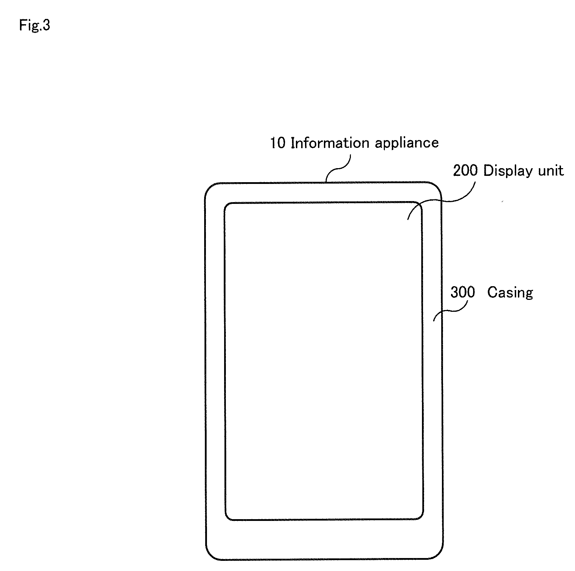

FIG. 3 is a diagram showing one example of the external appearance of information appliance 10 shown in FIG. 1.

As shown in FIG. 3, information appliance 10 shown in FIG. 1 is equipped with display unit 200 in single casing 300.

Now, the display control method in this embodiment will be described. To being with, from among the display control methods of this embodiment, a process by which display control apparatus 100 stores data for copying designated by the user will be described.

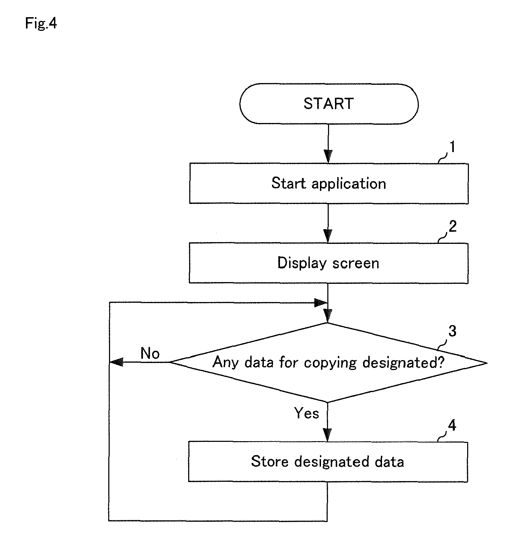

FIG. 4 is a flow chart for explaining one example of a process in the display control method in display control apparatus 100 shown in FIG. 1, whereby display control apparatus 100 stores the data designated for copying by the user. This process may also be the same as a process that is practiced in general.

First, at Step 1 the CPU (not illustrated) that is provided for display control apparatus 100 activates an application and display control unit 130 displays a display screen accompanying execution of the application on display unit 200 at Step 2.

Then, when operation detection unit 120 detects a user operation for designating copy at Step 3, the data designated for copying is written into memory 110.

In the display control method in this embodiment, description will be made hereinbelow on the process which display control apparatus 100 performs when the user pastes the data designated for copying.

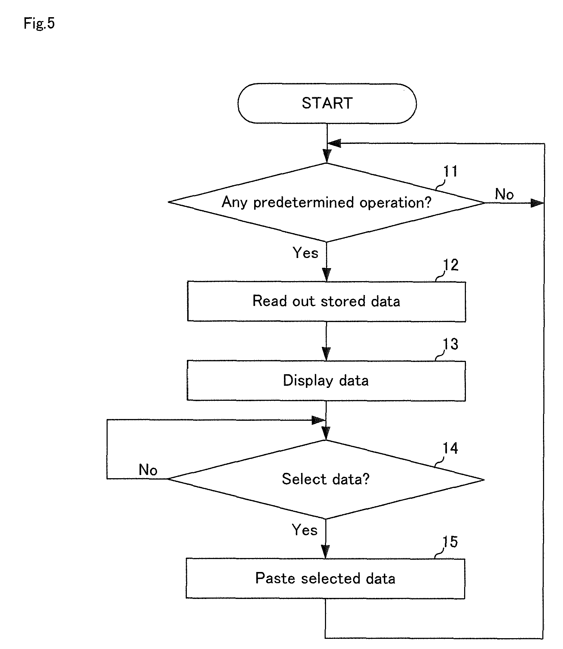

FIG. 5 is a flow chart for explaining one example of a process in the display control method in display control apparatus 100 shown in FIG. 1, which display control apparatus 100 preforms when the data designated for copying by the user is pasted.

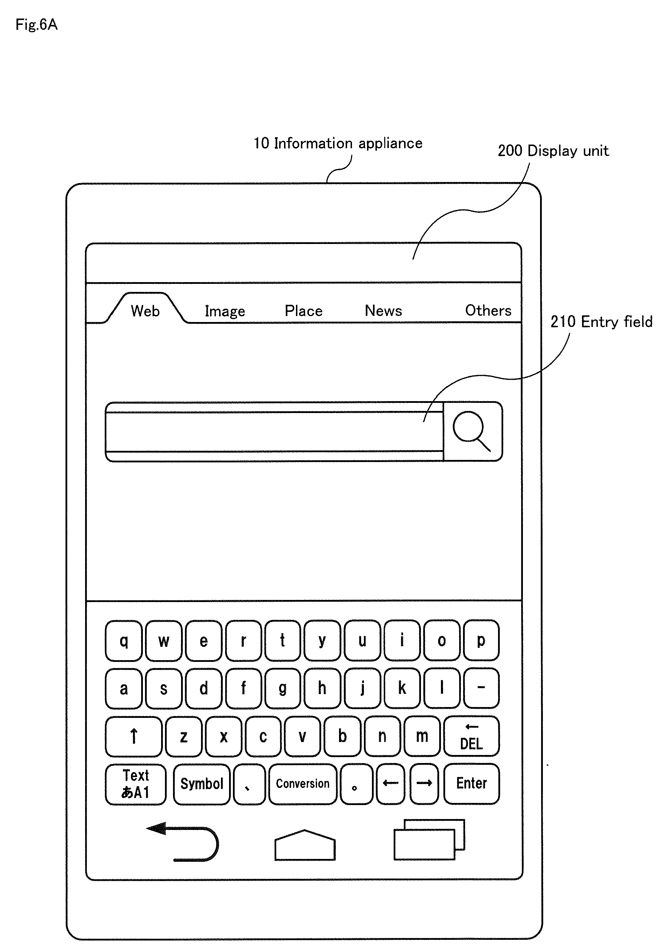

FIG. 6A is a diagram showing one example of how display control apparatus 100 shown in FIG. 1 makes display unit 200 display a display screen accompanying execution of an application.

As shown in FIG. 6A, display unit 200 displays a screen including entry field 210. Entry field 210 is displayed at a predetermined position on display unit 200 in accordance with instructions of the application and can be input with text strings.

While display unit 200 is displaying the screen shown in FIG. 6A, display control unit 130 determines at Step 11 whether or not operation detection unit 120 has detected a predetermined operation, in other words, an operation that causes display unit 200 to display a list of a plurality of data stored in memory 110. When display control unit 130 determines that operation detection unit 120 has detected the predetermined operation, display control unit 130 reads out the multiple pieces of data stored in memory 110 at Step 12. Then, at Step 13 display control unit 130 causes display unit 200 to display the retrieved multiple pieces of data in the form of a list. At this time, display control unit 130 displays the list over part of the screen being displayed by display unit 200.

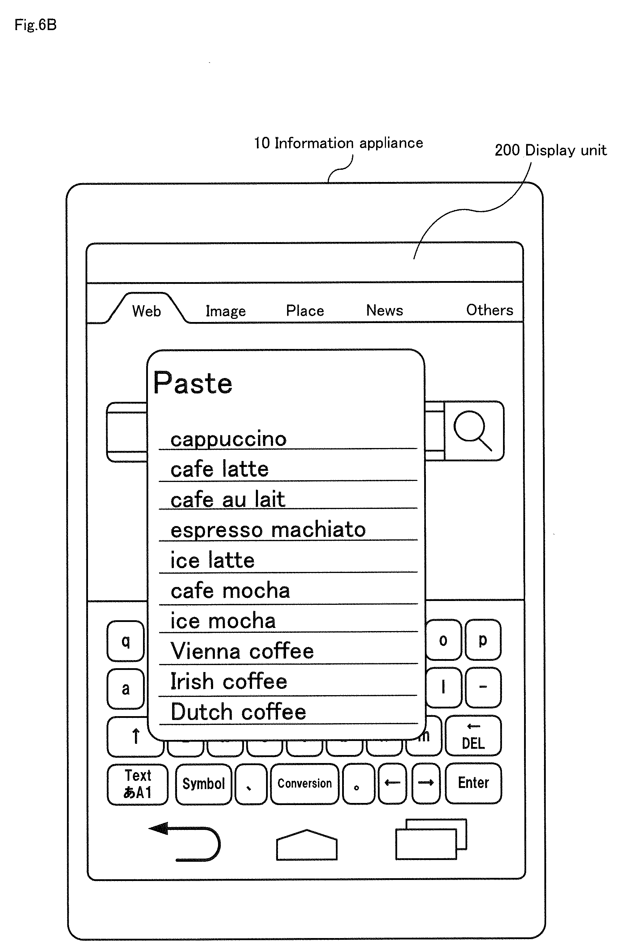

FIG. 6B is a diagram showing one example of a state of display given when display control unit 130 shown in FIG. 2 displays multiple pieces of data in a list form.

As shown in FIG. 6B, display control unit 130 displays a plurality of data as a list of pasteable data over part of the display screen (the display screen shown in FIG. 6A) displayed by display unit 200. The data 'cappuccino', 'cafe latte', 'cafe au lait', 'espresso machiato', 'ice latte', 'cafe mocha', 'ice mocha', 'Vienna coffee', 'Irish coffee' and 'Dutch coffee' are the data stored into memory 110 in the process at Steps 3 and 4 described in the flow chart shown in FIG. 4.

Thereafter, at Step 14, display control unit 130 determines whether or not operation detection unit 120 has detected an operation for selecting a desired piece of data from the list being displayed by display unit 200. When display control unit 130 determines that operation detection unit 120 has detected the operation for selecting a desired piece of data from the list displayed by display unit 200, display control unit 130 displays the data that is being displayed at the position on display unit 200 in accordance with the operation, in other words, the selected data, at a predetermined position on display unit 200, at Step 15.

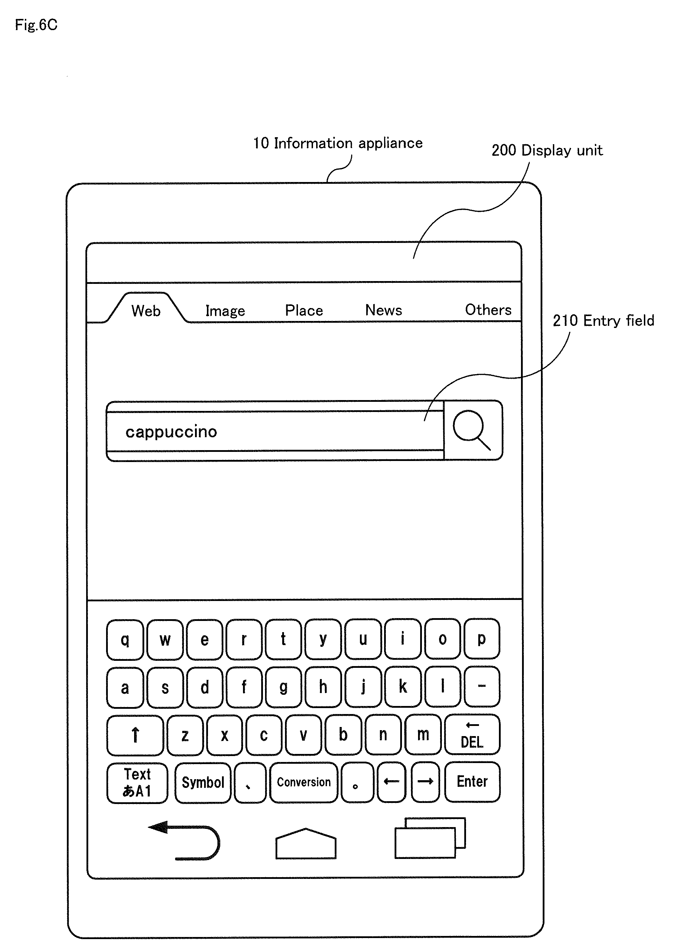

FIG. 6C is a diagram showing one example of a state of display given when display control unit 130 shown in FIG. 2 displays the selected data on display unit 200. FIG. 6C shows a case where 'cappuccino' is selected from the list shown in FIG. 6B.

As shown in FIG. 6C, 'cappuccino' that has been selected from the list displayed on display unit 200 by display control unit 130 is pasted in entry field 210 and displayed (entered).

In this way, data designated for copying has been stored into memory 110, and when operation detection unit 120 detects a pasting operation, display control unit 130 causes display unit 200 to display all pieces of data stored in memory 110 in a list form, then the data selected from the displayed list is displayed (entered) in the entry field. As a result, even if a plurality of data are designated for copying, data other than data stored last in the clipboard (memory 110) can also be pasted easily.

### (The Second Exemplary Embodiment)

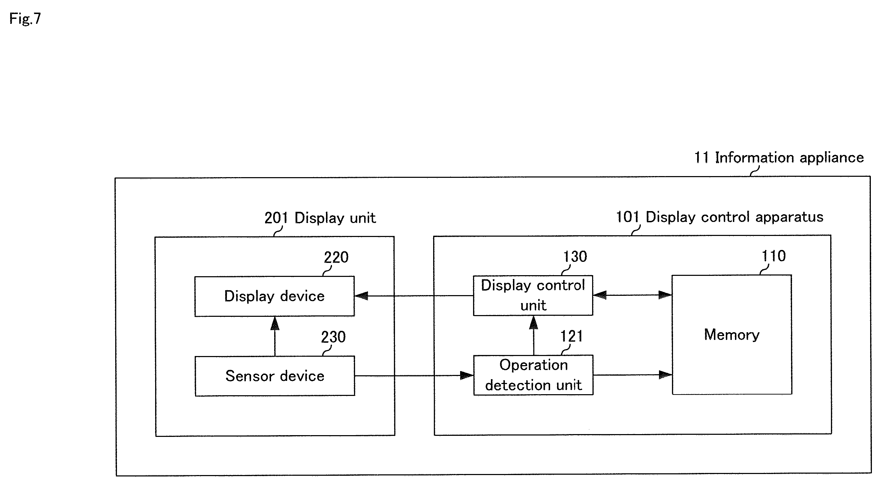

FIG. 7 is a diagram showing the second exemplary embodiment of an information appliance of the present invention. The second exemplary embodiment is attained in a form in which each user operation in the first exemplary embodiment is performed by touching the display unit having a touch-screen function.

Information appliance 11 in this embodiment includes display control apparatus 101 and display unit 201 as shown in FIG. 7. Here, in FIG. 7, from among the constituents provided for information appliance 11, essential constituents relating to the present exemplary embodiment are shown as an example.

Display unit 201 includes display device 220 and sensor device 230. Display device 220 is a display such as LCD or the like that displays information in accordance with the instructions from display control apparatus 101. Sensor device 230 detects a touch or approach of an object to display unit 201. Sensor device 230 notifies operation detection unit 121 of the result of detection. Display device 220 and sensor device 230 may be either physically separated or integrated to form a touchscreen.

Display control apparatus 101 includes memory 110, operation detection unit 121 and display control unit 130. Memory 110 and display control unit 130 are the same as those in the first exemplary embodiment. Operation detection unit 121 detects whether or not the result detected by sensor device 230 is a predetermined operation, based on the result of detection from sensor device 230. This predetermined operation is the same as that described in the first exemplary embodiment.

Next, the display control method in the present embodiment will be described. In the display control method in this embodiment, the process of display control apparatus 101 for storing the data that the user has designated for copying is the same as that described in the first exemplary embodiment. The operation of sensor device 230 will be described taking an example where touch of an object to display unit 201 is detected.

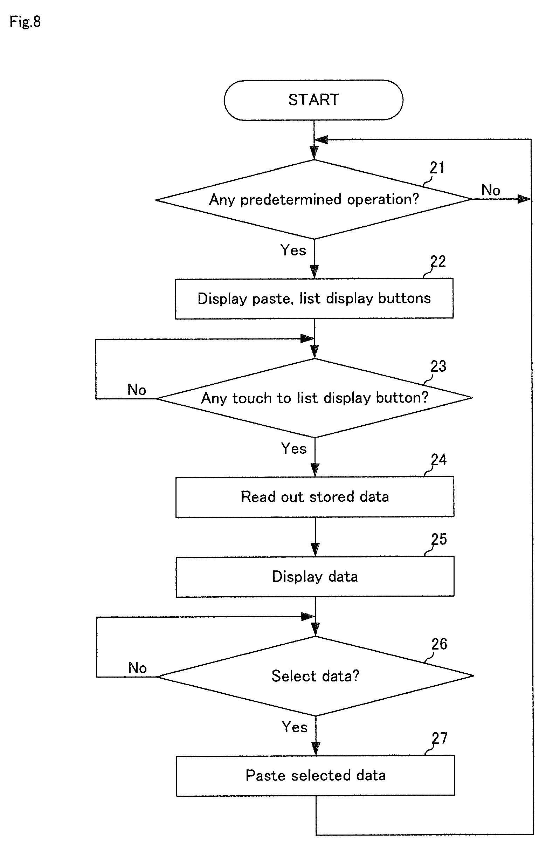

FIG. 8 is a flow chart for explaining one example of a process in the display control method in display control apparatus 101 shown in FIG. 7, which display control apparatus 101 performs when the user pastes the data designated for copying.

At Step 21, whilst display unit 201 is displaying the screen shown in FIG. 6A described in the first exemplary embodiment, display control unit 130 determines whether or not operation detection unit 121 has detected that the touch detected by sensor device 230 is a predetermined operation.

When display control unit 130 has determined that operation detection unit 121 has detected that the touch detected by sensor device 230 is a predetermined operation, display control unit 130 displays at Step 22 a paste button and a list display button for causing display unit 201 to display the data for copying designated by the user on display unit 201.

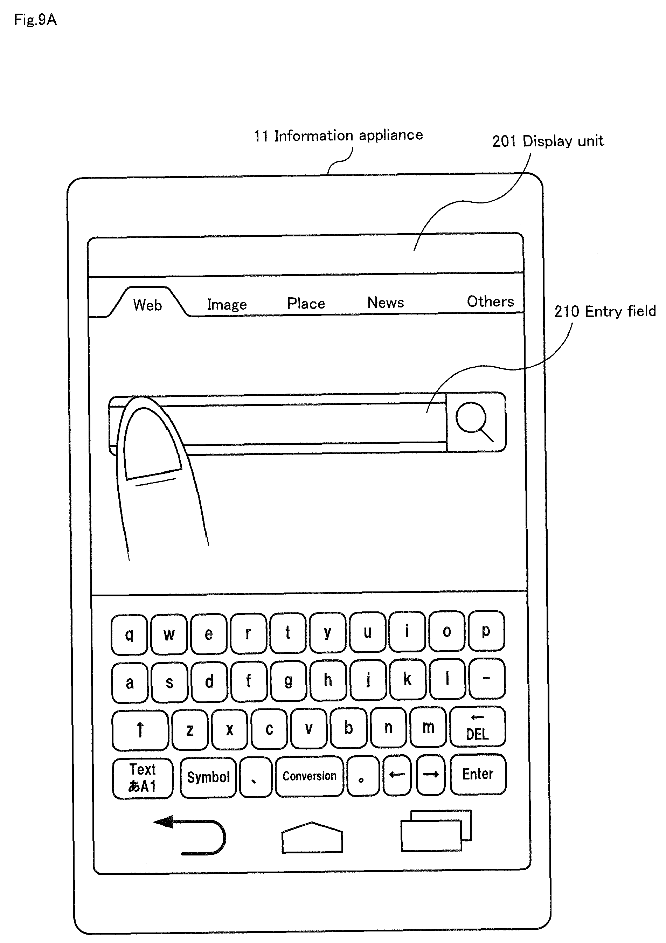

FIG. 9A is a diagram showing one example where the user is performing a predetermined operation when display control apparatus 101 shown in FIG. 7 displays a display screen accompanying execution of an application on the display unit.

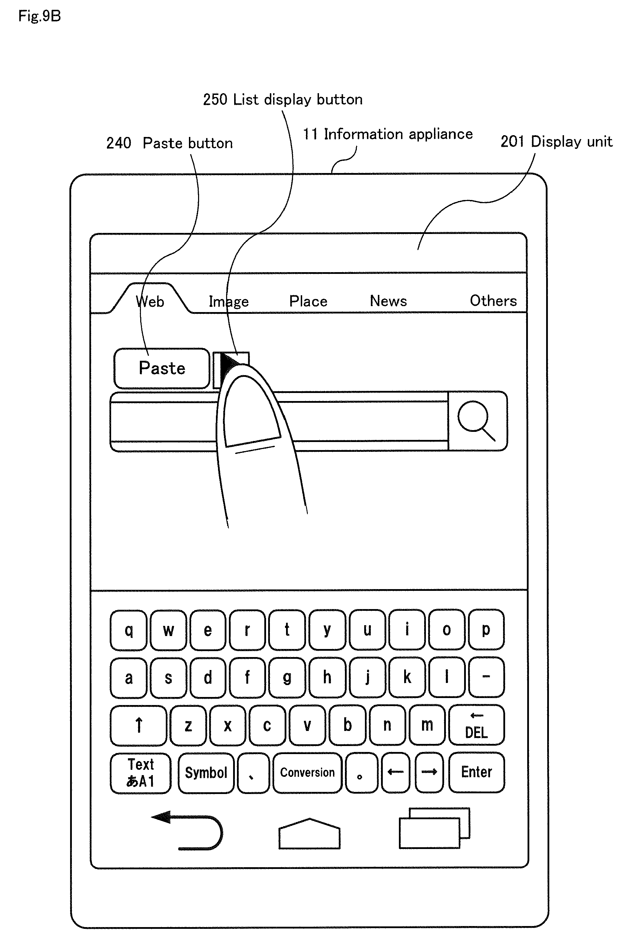

FIG. 9B is a diagram showing one example of a state of display on display unit 201 after completion of the process of Step 22.

As shown in FIG. 9A, when operation detection unit 121 detects that the touch detected by sensor device 230 is a touch action to touch entry field 210 displayed on display unit 201, display control unit 130 displays paste button 240 and list display button 250 on display unit 201 (display device 220) as shown in FIG. 9B. Here, it is also possible to provide a configuration in which display control unit 130 displays paste button 240 and list display button 250 on display unit 201 when a continuous touch action to touch entry field 210 equal to a preset period of time or longer has been detected.

Paste button 240 is the same as that generally used, and when the user selects paste button 240 by touching paste button 240 with a finger, display control unit 130 reads out the data stored last from the multiple pieces of data stored in memory 110 and displays (inputs) the retrieved data on entry field 210. Alternatively, display control unit 130 may display list display button 250 on display unit 201 when the user selects paste button 240 by touching paste button 240 with a finger.

When operation detection unit 121 detects at Step 23 that the touch detected by sensor device 230 when the user touches list display button 250 with a finger is a touch action to touch list display button 250 being displayed on display unit 201, display control unit 130 reads out a plurality of data stored in memory 110 at Step 24. Subsequently, at Step 25 display control unit 130 causes display unit 201 to display the read multiple pieces of data as a data list for pasting. At this time, display control unit 130 may cause display unit 201 to display the multiple pieces of data so that the data stored last into memory 110 comes in the first place. Further, display control unit 130 displays the list over part of the screen displayed by display unit 201.

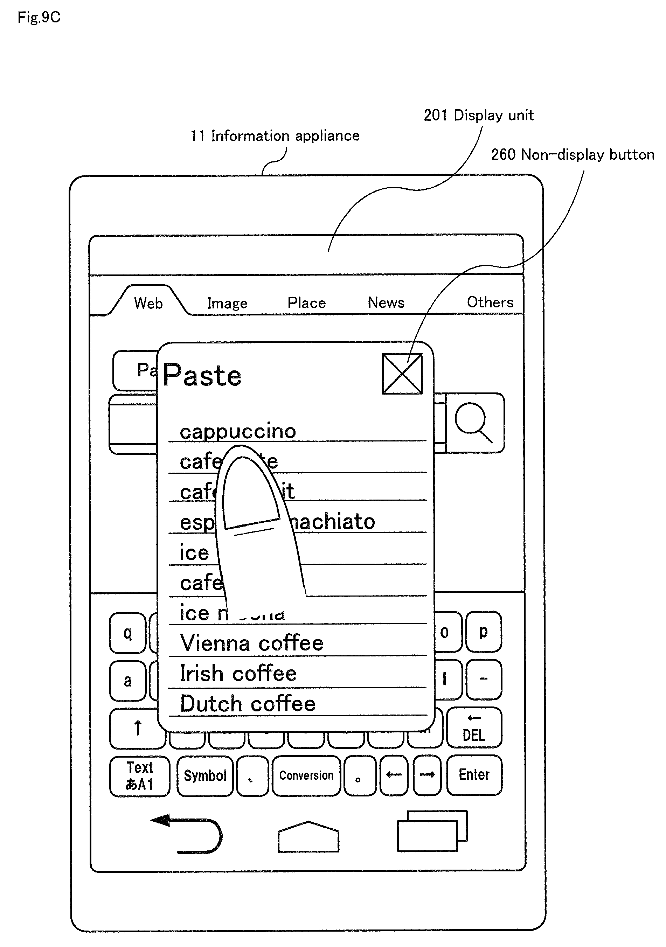

FIG. 9C is a diagram showing one example of a state of display that appears when display control unit 130 shown in FIG. 7 displays multiple pieces of data on display unit 201 in a list form.

As shown in FIG. 9C, display control unit 130 causes display unit 201 to display the multiple pieces of data over part of the display screen displayed by display unit 201 as a list of pasteable data. Display control unit 130 causes display unit 201 to display non-display button 260 for cancelling display the list, together with the list.

Then, at Step 26 display control unit 130 determines whether or not operation detection unit 121 has detected an operation for selecting a desired piece of data from the list being displayed by display unit 201. Specifically, display control unit 130 determines whether or not operation detection unit 121 has detected that the touch detected by sensor device 230 is a touch action to touch the displayed position of the list being displayed by display unit 201. When display control unit 130 determines that operation detection unit 121 has detected an operation for selecting a desired piece of data from the list being displayed by display unit 201, display control unit 130 displays the data being displayed at the position where a touch action has been detected by sensor device 230, in other words, the selected data, at the predetermined position on display unit 200. Herein, it is possible to provide a configuration where when the position of the touch action being detected by sensor device 230 has not changed for a predetermined period of time or longer, the data displayed at that position is displayed in the predetermined position on display unit 200. At this time, display control unit 130 cancels the list being displayed on display unit 201.

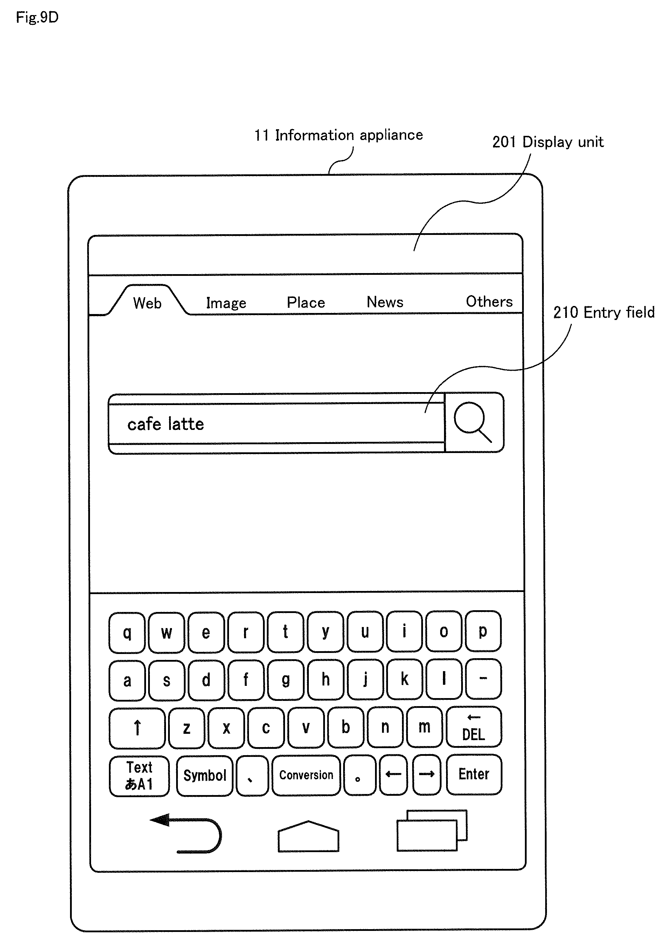

FIG. 9D is a diagram showing one example of a state of display that appears when display control unit 130 shown in FIG. 7 displays the selected data on display unit 201. FIG. 9D shows a case where 'cafe latte' is selected from the list shown in FIG. 9C.

As shown in FIG. 9D, 'cafe latte' that has been selected from the list displayed on display unit 201 by display control unit 130 is pasted in entry field 210 and displayed (entered).

Here in the above description, it is assumed that the user once releases the finger from display unit 201 after performing a touch action to touch paste button 240, list display button 250 and the displayed position of the pasting data. However, it is possible to provide a configuration where the user performs a series of operations without releasing the finger from display unit 201 through the contact with paste button 240, list display button 250 and the displayed position of the pasting data. For instance, it is possible to provide a configuration in which, when operation detection unit 121 detects that the user puts a finger on paste button 240, drags the finger to list display button 250 and keeps the finger at list display button 250 for a fixed period of time, display control unit 130 displays the list on display unit 201, and, when operation detection unit 121 detects that the user drags the finger to the position where the data needs to be pasted is displayed, without releasing the finger and then releases the finger therefrom, the same control process as above is adapted to be performed. The control process performed by a series of operations without releasing of the finger and the control performed by releasing the finger from display unit 201 at each of the above three step operations may be used in combination.

Thought the above description has been described by giving an example where a piece of data is selected from the list that includes multiple pieces of data and pasted, selection and pasting of multiple pieces of data may also be considered.

Display control unit 130 may determine the number of data to be pasted after displaying the list in accordance with the period of time in which the touched position or approach detected by sensor device 230 has not changed. For example, when the period of time in which the touched position or approach detected by sensor device 230 has not changed is shorter than a fixed period of time (when the touch is a tap or tapping action on display unit 201), display control unit 130 assumes, as the data to be pasted, one piece of data displayed at the position where the touch has been detected. When the period of time in which the touched position or approach detected by sensor device 230 has not changed is longer than a fixed period of time, display control unit 130 assumes multiple pieces of data as the data to be pasted.

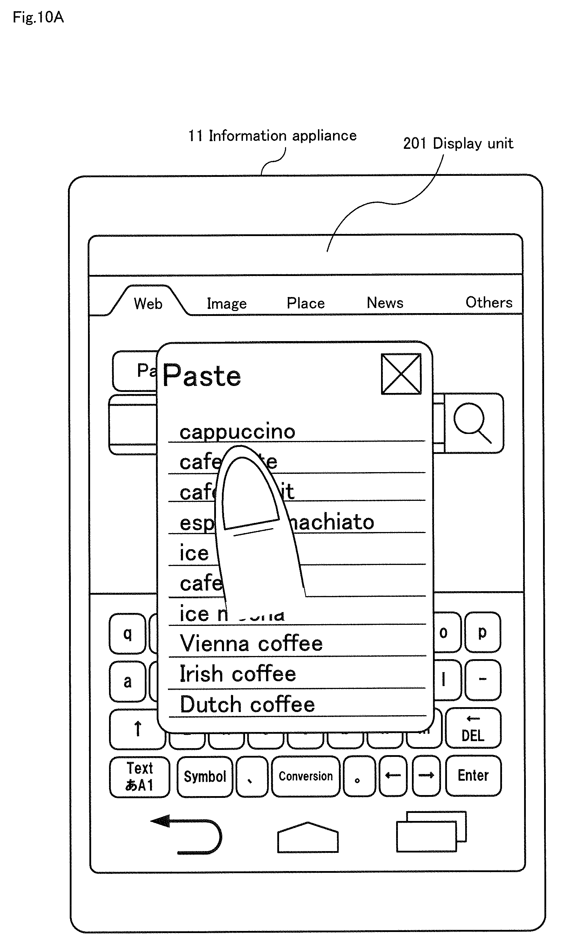

FIGS. 10A to 10E are diagrams showing one example of the behavior when display control unit 130 shown in FIG. 7 performs a process of displaying (entering) multiple pieces of data in entry field 210.

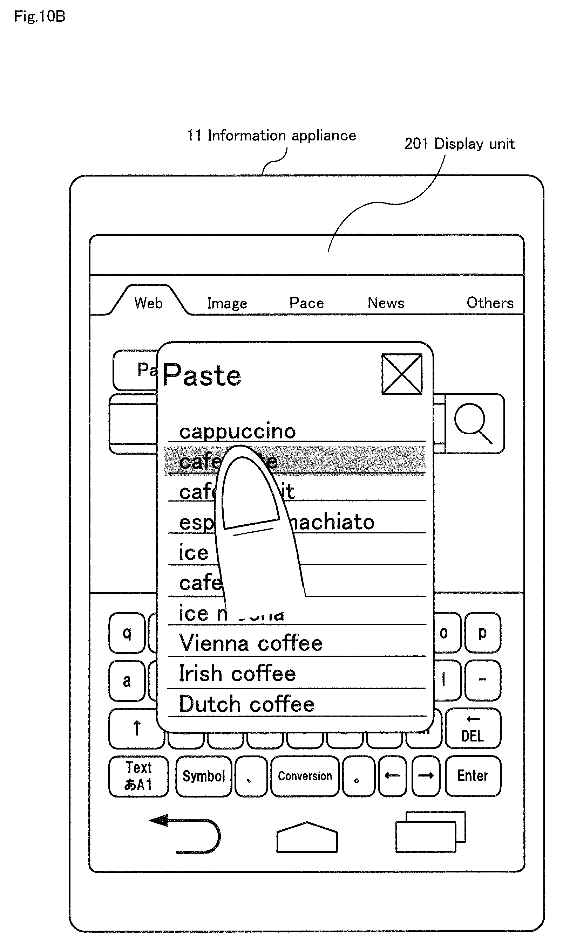

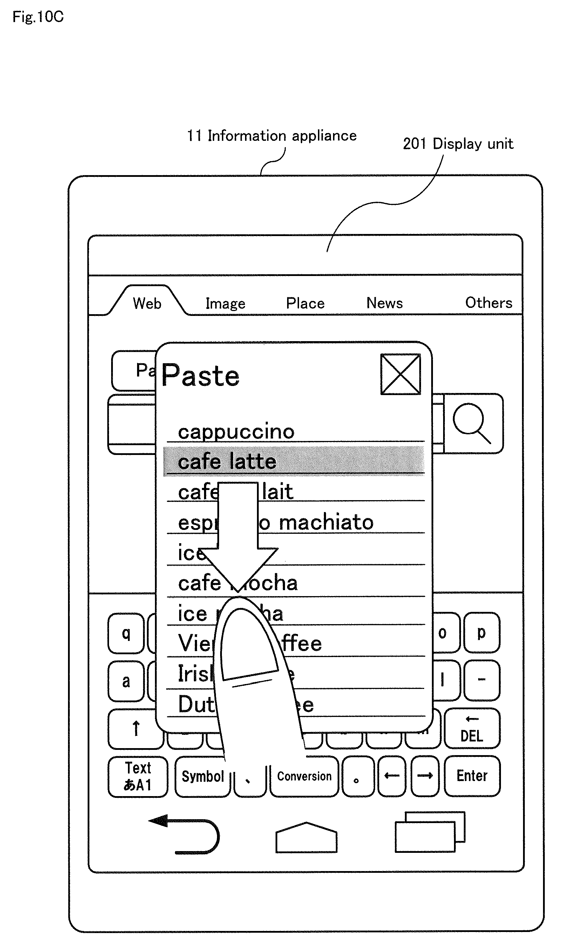

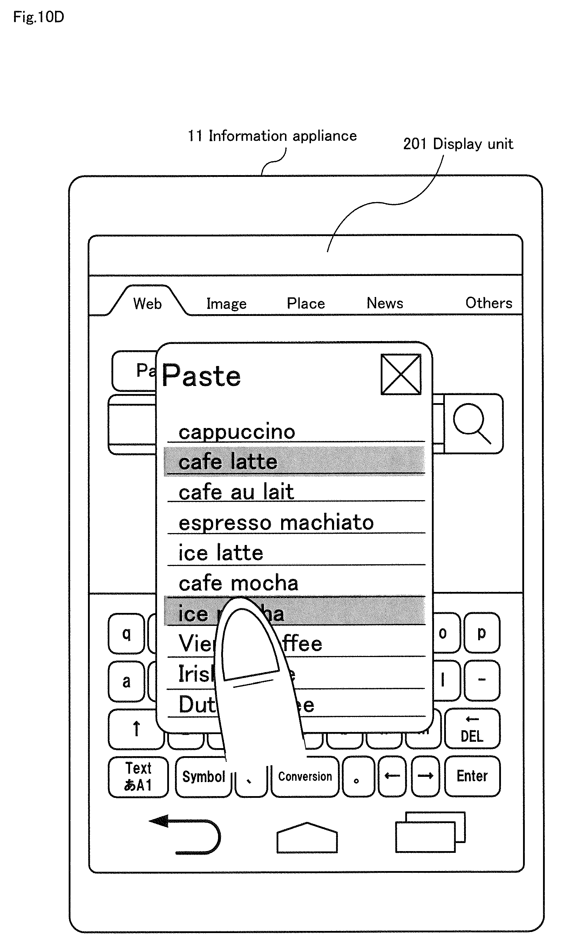

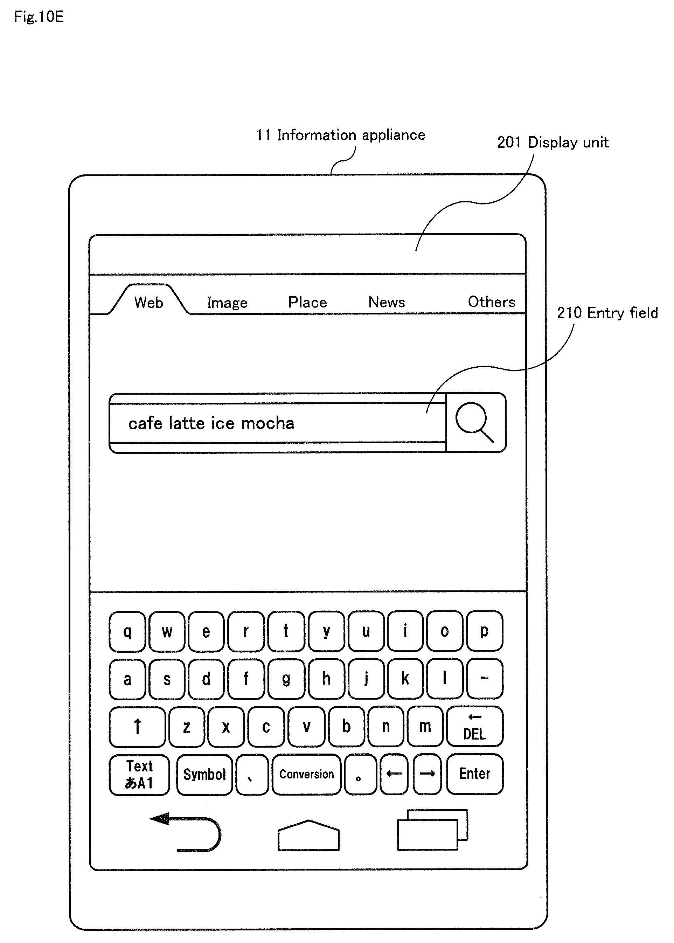

As shown in FIG. 10A, sensor device 230 detects finger contact at the display position of the piece of data ('cafe latte' in the example shown in FIG. 10A), and when the position has not changed for a period of time equal to or longer than a predetermined period, display control unit 130 performs emphasized display of the data residing at that position on display unit 201, compared to the display of the other data, by inverting the color of the background or other methods, as shown in FIG. 10B. Then, when the user moves the finger over the list, while maintaining contact as shown in FIG. 10C, operation detection unit 121 detects movement of the finger by continuous detection of sensor device 230 on the finger contact. Thereafter, when operation detection unit 121 detects stoppage of the detected position for a period of time longer than a predetermined period, display control unit 130 performs emphasized display of a piece of data ('ice mocha' in the example shown in FIG. 10D) residing at that position on display unit 201, compared to the display of the other data, by inverting the color of the background or other methods, as shown in FIG. 10D. When the process based on this control process is repeated until sensor device 230 does not detect finger contact, display control unit 130 displays (enters) the emphasized data on entry field 210 in the order of being emphasized, as shown in FIG. 10E. Here, when the position of the touch detected by sensor device 230 coincides with the displayed position of the data that has been already emphasized and that has not changed for a predetermined period of time or longer, display control unit 130 cancels the emphasized display of that data. Display control unit 130 may also indicate the order of emphasized display by changing the color tone of emphasized display.

The above description has been made by giving an example of a control process using one touch point to select multiple pieces of data. However, if a touchscreen supporting multi-touch is used, selection of multiple data may be performed using multi-touch operation. As to the order of pasting data when multiple pieces of data are selected by multi-touch operation, when operation detection unit 121 has detected that multiple fingers are released at almost the same time from respective positions of data being displayed, the multiple pieces of data are pasted in the order of sensor device 230's detection of the touch action to touch the position where each data is displayed. When the fingers are released at different times, the data are pasted in the order of sensor device 230's detection of release of the touch from the position where each data is displayed.

When operation detection unit 121 detects that the touched position that has been detected by sensor device 230 is located at the displayed position of non-display button 260 in the list, display control unit 130 cancels display of the list. Further, display control unit 130 may cancel display of the list when operation detection unit 121 detects that the touched position that has been detected by sensor device 230 is located outside the displayed position of the list.

In the above way, data designated for copying has been stored into memory 110, and when operation detection unit 120 detects that a touch action or approach detected by sensor device 230 is an operation for displaying the list of data, display control unit 130 displays all pieces of data stored in memory 110 in a list form on display unit 201. Then the data being displayed at the position where a touch action or approach has been detected by sensor device 230 is displayed (entered) in the entry field. As a result, even if a plurality of data are designated for copying, data other than data stored last in the clipboard (memory 110) can also be pasted easily. Further, in accordance with the period of time in which the touched position or approach detected by sensor device 230 has been unchanged, a plurality of data are displayed (entered) in the entry field. As a result, it is possible to not only paste one piece of data but also to easily paste a plurality of data at a time.

### (The Third Embodiment)

Though the description heretofore has been made by giving an example where the information appliance uses a single screen, or includes a single display unit, the information appliance may be equipped with two or more display units (multiple screens).

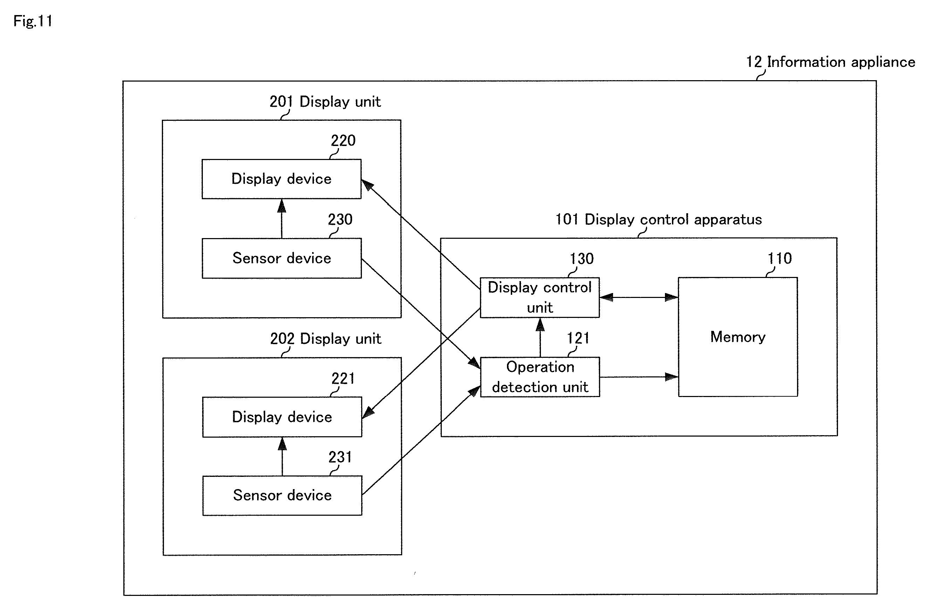

FIG. 11 is a diagram showing the third exemplary embodiment of an information appliance of the present invention. The third exemplary embodiment is configured with a multiple number of display units that are used in the second embodiment.

Information appliance 12 in the embodiment includes display control apparatus 101 and display units 201 and 202 as shown in FIG. 11. Here, in FIG. 11, from among the constituents provided for information appliance 12, essential constituents relating to the present exemplary embodiment are shown as an example.

Display control apparatus 101 and display unit 201 are the same as those in the second exemplary embodiment.

Display unit 202 includes display device 221 and sensor device 231. Display device 221 is the same as display device 220 shown in FIG. 7. Sensor device 231 detects a touch action or approach of an object to display unit 202. Sensor device 231 notifies operation detection unit 121 of the detection result. Display device 221 and sensor device 231 may be either physically separated or integrated to form a touchscreen.

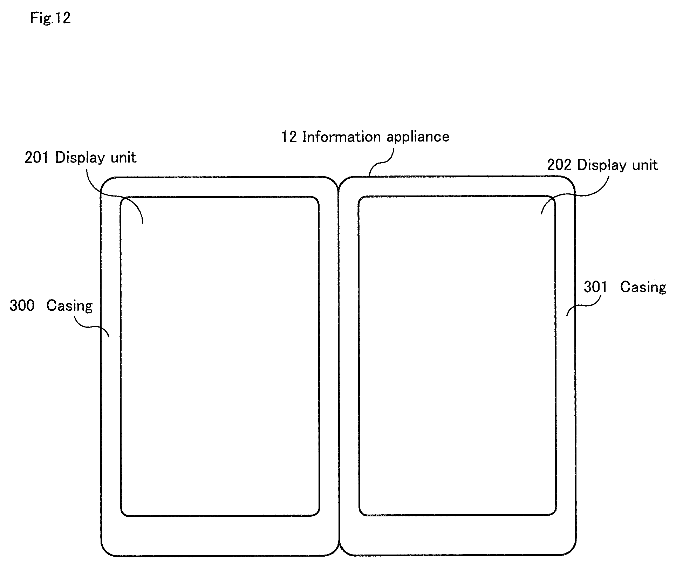

FIG. 12 is a diagram showing one example of the external appearance of information appliance 12 shown in FIG. 11.

Information appliance 12 shown in FIG. 11 is comprised of two casings 300 and 301 as shown in FIG. 12. Casings 300 and 301 are equipped with display units 201 and 202, respectively.

In the embodiment shown in FIG. 11, the same process as in the second exemplary embodiment is performed up to the process of display control unit 130 to display paste button 240 on display unit 201.

When operation detection unit 121 detects that the contact detected by sensor device 230 as a result of user's finger touching to paste button 240 is a touch to paste button 240 displayed on display unit 201, display control unit 130 reads out a plurality of data stored in memory 110. Subsequently, display control unit 130 displays a plurality of read data as a data list for pasting in the area where entry field 210 is not displayed on display unit 202.

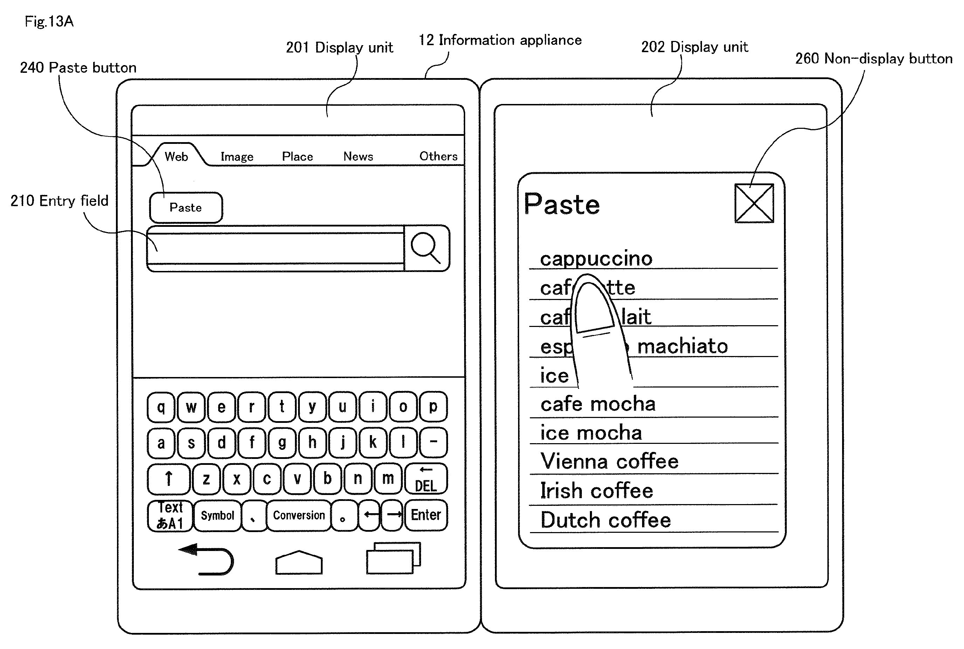

FIG. 13A is a diagram showing one example of the state of a display that appears when display control unit 130 shown in FIG. 11 displays multiple pieces of data on display unit 202 in a list form.

As shown in FIG. 13A, display control unit 130 may cause display unit 202 to display the multiple pieces of data as a list of pasting data so that the data stored last into memory 110 comes in the first place. Further, display control unit 130 displays non-display button 260 together with the list on display unit 202. Here, display control unit 130 displays the list on display unit 202 while paste button 240 is being displayed. When paste button 240 is displayed on display unit 201 after display of the list has been canceled, display control unit 130 displays the list on display unit 202 again. Here, if operation detection unit 121 detects that the contact detected by sensor device 230 is a touch action inside the list displayed on display unit 201, no switching of applications and switching of the screens between active and inactive modes will take place.

Then, display control unit 130 determines whether or not operation detection unit 121 has detected an operation for selecting a desired piece of data from the list being displayed by display unit 201. Specifically, display control unit 130 determines whether or not operation detection unit 121 has detected that a contact detected by sensor device 231 is a touch action to the displayed position of the list being displayed by display unit 202. When display control unit 130 determines that operation detection unit 121 has detected an operation for selecting a desired piece of data from the list being displayed by display unit 202, display control unit 130 displays the data being displayed at the position where that contact has been detected by sensor device 231, in other words, the selected data, at the predetermined position on display unit 201. Herein, it is possible to provide a configuration where, when the position of a contact being detected by sensor device 231 has not changed for a predetermined period of time or longer, the data displayed at that position is displayed in the predetermined position on display unit 201. At this time, display control unit 130 cancels display of the list being displayed on display unit 202.

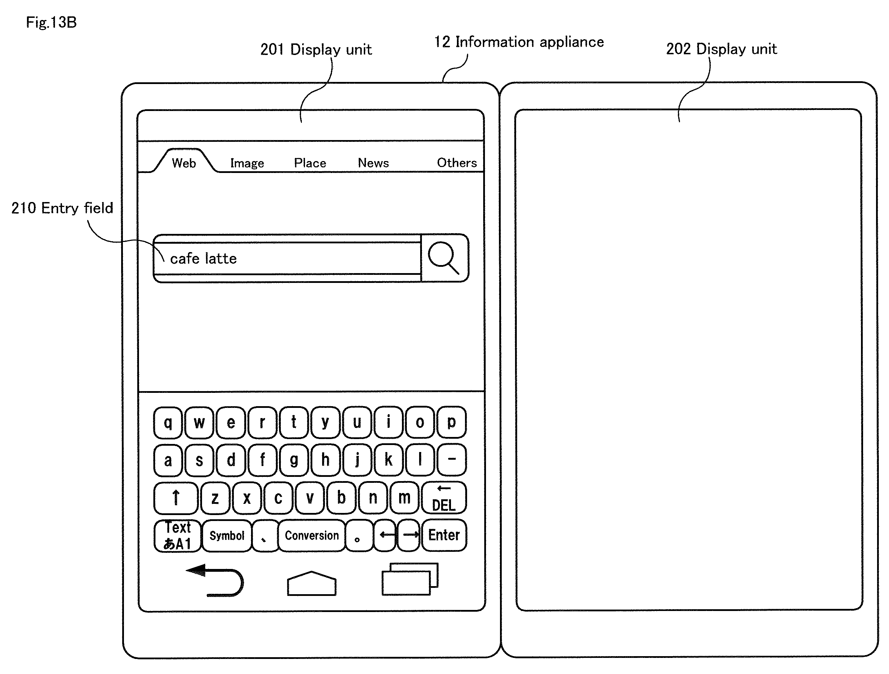

FIG. 13B is a diagram showing one example of the state of a display that appears when display control unit 130 shown in FIG. 11 displays the selected data on display unit 201. FIG. 13B shows an example where 'cafe latte' is selected from the list shown in FIG. 13A.

As shown in FIG. 13B, 'cafe latte' that has been selected from the list displayed on display unit 202 by display control unit 130 is displayed (entered) in entry field 210.

In the above way, in the case of a multiscreen, when paste button 240 is selected, a list of data for pasting is displayed on the display unit with no entry field 210 displayed, so that it is not necessary to display the list-display button as is required in a single screen device. Further, display control unit 130 displays the list on display unit 202, which is provided separately from display unit 201 that performs display for operation detection unit 121 to detect operations until displaying the list, or display unit 201 through which the user is controlling the application. It is therefore possible to reduce the number of operations without interfering with the user's control of the application.

Further, the list of data for pasting described in the first to third exemplary embodiments may be provided with a button for deleting data displayed in the data list. This description will be given by using the embodiment shown in FIG. 7.

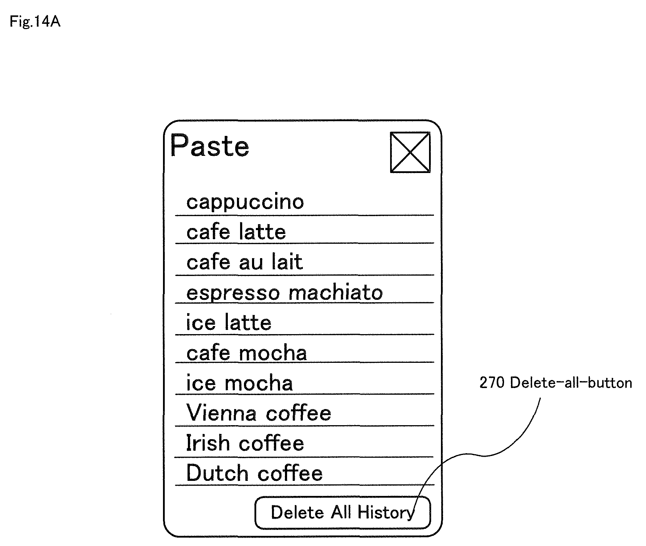

FIG. 14A is a diagram showing one example of a list when a button for deleting all history of data that has been designated for copying and displaying in a list form is displayed on display unit 201 by display control unit 130.

As shown in FIG. 14A, delete-all-button 270 is displayed with an indication of 'Delete All History', and when operation detection unit 121 detects that the contact detected by sensor device 230 is a touch action on delete-all-button 270 displayed on display unit 201, display control unit 130 deletes all the multiple pieces of data stored in memory 110.

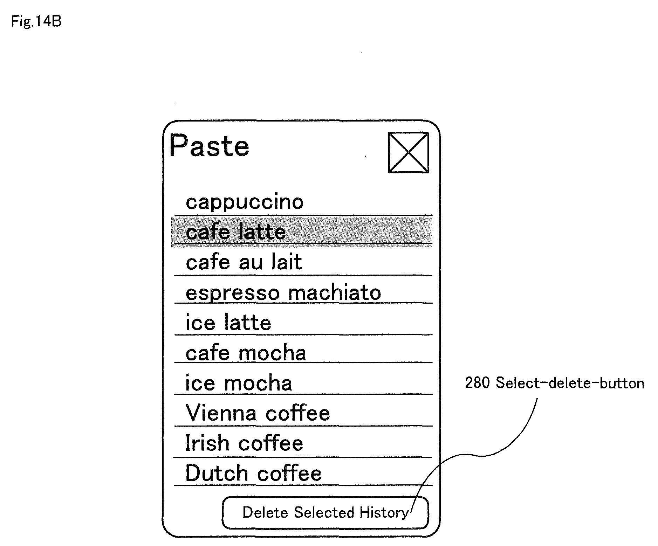

FIG. 14B is a diagram showing one example of a list when a button for deleting part of history of data that has been designated for copying and displaying in a list form is displayed on display unit 201 by display control unit 130.

As shown in FIG. 14B, select-delete-button 280 is displayed with an indication of 'Delete Selected History'. When the user touches the finger at a displayed position of one piece of data, and keeps the finger at that position for a predetermined period of time or longer and then moves the finger over the list without releasing it from display unit 201, sensor device 230 detects a continuous finger contact and operation detection unit 121 detects movement of the detected position. When operation detection unit 121 detects that the contact is a touch action to touch to select-delete button 280, display control unit 130 deletes the data displayed at the position of the detected touch, from among a plurality of data stored in memory 110. In this case, display control unit 130 may perform emphasized display of the data residing at the first detected touched position, on display unit 201, in contrast to the display of the other data, by inverting the color of the background or other methods. It is also possible to perform a process of deleting multiple pieces of data at a time by performing a similar operation as that for pasting a plurality of data at a time.

In this way, it is possible to tidy up the data on the history list by providing a function for deleting unnecessary data from memory 110 that functions as a clipboard, hence it is possible to use the history list more conveniently.

Further, description of the first to third exemplary embodiments has been made by giving an example where a button for data pasting is displayed near entry field 210. Other than this, the present invention can be applied to a configuration where a button for pasting is displayed on the top bar of the screen when a text range is selected.

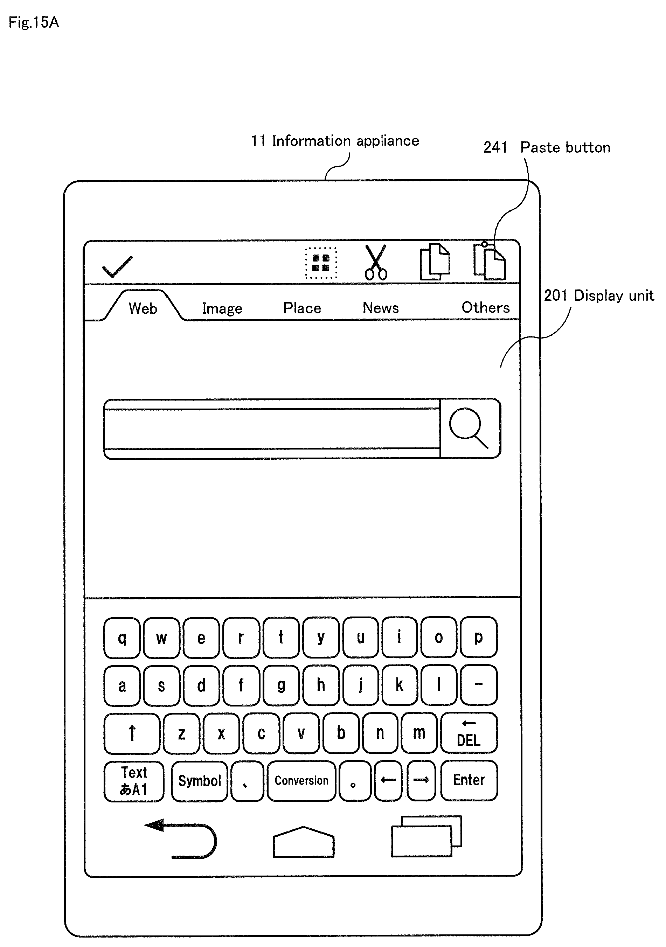

FIG. 15A is a diagram showing another display example of a paste button.

As shown in FIG. 15A paste button 241 may be displayed on the bar at the top of the screen when a range of text on display unit 201 is selected.

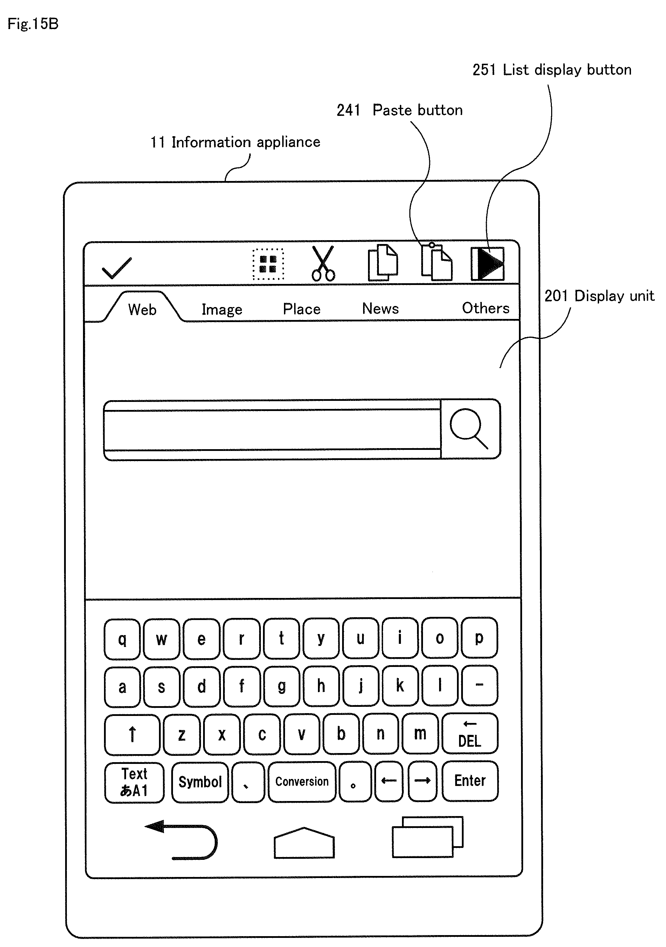

FIG. 15B is a diagram showing one example of a list display button when paste button 241 shown in 15A has been selected.

As paste button 241 shown in FIG. 15A is selected, list display button 251 is displayed on the side of paste button 241 as shown in FIG. 15B.

Here, information appliances 10 and 11 may be an electronic appliance such as a mobile phone, mobile terminal, tablet type or notebook type PC (Personal Computer), smartphone, PDA (Personal Digital Assistants), game device, digital camera or the like.

The process by which each component is provided for display control apparatus 100, 101 performs may be realized by a logical circuit prepared depending on the purpose. Alternatively, a computer program (which will be referred to hereinbelow as program) describing the sequence of the processing contents may be recorded on a recording medium that can be read by display control apparatus 100, 101, so that the program recorded on this recording medium can be loaded into display control apparatus 100, 101 and executed thereby. Examples of the recording medium that can be read by display control apparatus 100, 101 include removable recording media such as floppy (registered trademark) disks, magneto optical disks, DVDs, CDs, etc., and memories such as ROM, RAM, HDDs and the like incorporated in display control apparatus 100, 101. The program recorded on the recording medium is loaded by the CPU (not shown) provided for each of display control apparatuses 100 and 101, and the same process described above is carried out under control of the CPU. Here, the CPU operates as a computer for executing a program loaded from the recording medium with programs recorded thereon.

Part or whole of the above exemplary embodiments is described as the following appendixes, but the invention should not be limited to these.
(Appendix 1) A display control apparatus comprising:
   a memory that stores multiple pieces of designated data;
   an operation detection unit that detects a first operation and a second operation;
   a display control unit that displays the multiple pieces of data stored in the memory on a display unit when the operation detection unit detects the first operation, and displays, from among the multiple pieces of data displayed on the display unit, the data displayed at a position corresponding to the second operation, at a predetermined position on the display unit when the operation detection unit detects the second operation.
(Appendix 2) The display control apparatus according to Appendix 1, wherein the operation detection unit detects the first operation and the second operation when the display unit detects a touch action or approach of an object to the display unit, and,
   when the operation detection unit detects the second operation, the display control unit displays, from among the multiple pieces of data displayed on the display unit, the data displayed at the position where the operation detection unit has detected the second operation, at a predetermined position on the display unit.
(Appendix 3) The display control apparatus according to Appendix 2, wherein when the operation detection unit has detected the second operation and the when detected position of the second operation has not changed for a predetermined period of time or longer, the display control unit displays, from among the multiple pieces of data displayed on the display unit, the data displayed at the detected position of the second operation, at a predetermined position on the display unit.
(Appendix 4) The display control apparatus according to any one of Appendixes 1 to 3, wherein when there are multiple pieces of data at position corresponding to the second operation, the display control unit causes the display unit to display the multiple pieces of data in such a manner that the order in which the second operation was performed can be identified.
(Appendix 5) The display control apparatus according to any one of Appendixes 1 to 4, wherein when there are two display units, the display control unit displays the multiple pieces of data on one of the two display units, through which the operation detection unit is not performing display to detect the first operation.
(Appendix 6) A display control method comprising the steps of:
   storing multiple pieces of designated data into a memory;
   detecting a first operation and a second operation;
   displaying the multiple pieces of data stored in the memory on a display unit when the first operation is detected; and,
   displaying, from among the multiple pieces of data displayed on the display unit, the data displayed at a position corresponding to the second operation, at a predetermined position on the display unit when the second operation is detected.
(Appendix 7) A program that causes a computer to execute:
   a step of storing multiple pieces of designated data into a memory;
   a step of detecting a first operation and a second operation;
   a step displaying the multiple pieces of data stored in the memory on a display unit when the first operation is detected; and,
   a step of displaying, from among the multiple pieces of data displayed on the display unit, the data displayed at a position corresponding to the second operation, at a predetermined position on the display unit when the second operation is detected.
(Appendix 8) An information appliance comprising:
   a display unit;
   a memory that stores multiple pieces of designated data;
   an operation detection unit that detects a first operation and a second operation;
   a display control unit that displays the multiple pieces of data stored in the memory on the display unit when the operation detection unit detects the first operation, and displays, from among the multiple pieces of data displayed on the display unit, the data displayed at a position corresponding to the second operation, at a predetermined position on the display unit when the operation detection unit detects the second operation.

Although the present invention has been explained with reference to the exemplary embodiments, the present invention should not be limited to the above exemplary embodiments. Various modifications that can be understood by those skilled in the art may be made to the structures and details of the present invention within the scope of the present invention.

This application claims priority based on Japanese Patent Application No. 2013-53373, filed on March 15, 2013, and should incorporate all the disclosure thereof herein.

## Claims

1. A display control apparatus comprising:
a memory that stores multiple pieces of designated data;
an operation detection unit that detects a first operation and a second operation;
a display control unit that displays the multiple pieces of data stored in the memory on a display unit when the operation detection unit detects the first operation, and displays, from among the multiple pieces of data displayed on the display unit, the data displayed at a position corresponding to the second operation, at a predetermined position on the display unit when the operation detection unit detects the second operation.

2. The display control apparatus according to Claim 1, wherein the operation detection unit detects the first operation and the second operation when the display unit detects a touch action or approach of an object to the display unit, and,
when the operation detection unit detects the second operation, the display control unit displays, from among the multiple pieces of data displayed on the display unit, the data displayed at the position where the operation detection unit has detected the second operation, at a predetermined position on the display unit.

3. The display control apparatus according to Claim 2, wherein when the operation detection unit has detected the second operation and the detected position of the second operation has not changed for a predetermined period of time or longer, the display control unit displays, from among the multiple pieces of data displayed on the display unit, the data displayed at the detected position of the second operation, at a predetermined position on the display unit.

4. The display control apparatus according to any one of Claims 1 to 3, wherein when there are multiple pieces of data at a position corresponding to the second operation, the display control unit causes the display unit to display the multiple pieces of data in such a manner that the order in which the second operation was performed can be identified.

5. The display control apparatus according to any one of Claims 1 to 4, wherein when there are two display units, the display control unit displays the multiple pieces of data on one of the two display units through which the operation detection unit is not performing display to detect the first operation.

6. A display control method comprising the steps of:
storing multiple pieces of designated data into a memory;
detecting a first operation and a second operation;
displaying the multiple pieces of data stored in the memory on a display unit when the first operation is detected; and,
displaying, from among the multiple pieces of data displayed on the display unit, the data displayed at a position corresponding to the second operation, at a predetermined position on the display unit when the second operation is detected.

7. A program that causes a computer to execute:
a step of storing multiple pieces of designated data into a memory;
a step of detecting a first operation and a second operation;
a step of displaying the multiple pieces of data stored in the memory on a display unit when the first operation is detected; and,
a step of displaying, from among the multiple pieces of data displayed on the display unit, the data displayed at a position corresponding to the second operation, at a predetermined position on the display unit when the second operation is detected.

8. An information appliance comprising:
a display unit;
a memory that stores multiple pieces of designated data;
an operation detection unit that detects a first operation and a second operation;
a display control unit that displays the multiple pieces of data stored in the memory on the display unit when the operation detection unit detects the first operation, and displays, from among the multiple pieces of data displayed on the display unit, the data displayed at a position corresponding to the second operation, at a predetermined position on the display unit when the operation detection unit detects the second operation.
